(19) Europäisches Patentamt / European Patent Office / Office européen des brevets

(11) **EP 2 777 090 B1**

(12) **FASCICULE DE BREVET EUROPEEN**

(45) Date de publication et mention de la délivrance du brevet:
**10.02.2016 Bulletin 2016/06**

(21) Numéro de dépôt: **12795501.1**

(22) Date de dépôt: **08.11.2012**

(51) Int Cl.:
*H01M 10/26* *(2006.01)*   *H01M 12/02* *(2006.01)*
*H01M 12/08* *(2006.01)*   *H01M 10/0567* *(2010.01)*
*H01M 12/06* *(2006.01)*

(86) Numéro de dépôt international:
**PCT/FR2012/052576**

(87) Numéro de publication internationale:
**WO 2013/068694 (16.05.2013 Gazette 2013/20)**

(54) **ELECTROLYTE AQUEUX POUR BATTERIE LITHIUM-AIR**

WÄSSRIGES ELEKTROLYT FÜR EINE LITHIUM-LUFTBATTERIE

AQUEOUS ELECTROLYTE FOR LITHIUM-AIR BATTERY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.11.2011 FR 1160224**

(43) Date de publication de la demande:
**17.09.2014 Bulletin 2014/38**

(73) Titulaire: **Electricité de France**
**75008 Paris (FR)**

(72) Inventeurs:
• **STEVENS, Philippe**
  **F-77940 Noisy Rudignon (FR)**
• **TOUSSAINT, Gwenaëlle**
  **F-77140 Nemours (FR)**
• **MOUREAUX, Florian**
  **F-88330 Portieux (FR)**
• **CHATENET, Marian**
  **F-38240 Meylan (FR)**

(74) Mandataire: **Cabinet Plasseraud**
**52, rue de la Victoire**
**75440 Paris Cedex 09 (FR)**

(56) Documents cités:
DE-A1- 2 507 396    DE-A1- 2 621 931
FR-A1- 2 951 714    US-A- 4 684 584
US-A- 5 427 873    US-A1- 2008 070 087

EP 2 777 090 B1

**Description**

La présente invention concerne un dispositif électrochimique, en particulier une batterie de type lithium-air à électrolyte aqueux, ainsi qu'un procédé de stockage et de restitution d'énergie électrique utilisant une batterie lithium-air selon l'invention.

La densité d'énergie massique (exprimée en Wh/kg) des batteries reste la principale limitation pour leur utilisation dans les équipements portables, tels que l'électronique portable ou les véhicules électriques. La limitation énergétique de ces batteries est en grande partie liée aux performances des matériaux qui la composent. Les meilleurs matériaux d'électrode négative actuellement disponibles ont généralement une capacité spécifique comprise entre 300 à 350 Ah/kg. Celle-ci est de l'ordre de 100 à 150 Ah/kg seulement pour les matériaux de l'électrode positive.

L'avantage des systèmes lithium-air réside dans l'utilisation d'une électrode positive de capacité infinie. L'oxygène consommé à l'électrode positive n'a pas besoin d'être stocké dans l'électrode mais peut être prélevé dans l'air ambiant.

L'électrode à air a besoin d'un milieu aqueux, basique ou acide, pour pouvoir fonctionner de façon optimale. Malheureusement, le lithium métallique utilisé pour l'électrode négative est trop réactif vis-à-vis de l'eau et sa formation en présence d'eau, au cours de la recharge, est impossible car la réduction de l'eau s'opère à des tensions beaucoup plus faibles, empêchant la formation de lithium métal. Une barrière physique étanche à l'eau est donc nécessaire entre le compartiment de l'électrode négative à base de lithium métal et le compartiment d'électrode positive contenant un électrolyte aqueux. Cette barrière physique étanche à l'eau doit toutefois laisser passer sélectivement les cations métalliques de l'électrolyte aqueux vers l'électrode négative et dans le sens inverse.

On connaît depuis un certain temps sous la dénomination « Li Super Ionic Conductor » (LISICON) des matériaux céramiques qui répondent à ces exigences. Ces matériaux ont des conductivités avantageusement élevées allant jusqu'à $10^{-4}$ voire $10^{-3}$ S/cm à 25 °C et présentent une bonne stabilité chimique vis-à-vis de l'électrolyte aqueux dans le compartiment d'électrode positive (électrode à air). Toutefois, leur réactivité avec le lithium métallique dans le compartiment anodique est très importante et il est indispensable de les isoler de manière connue du lithium métallique par un revêtement de protection, par exemple à base d'un verre d'oxynitrure de phosphore et de lithium (LiPON).

Les premiers travaux en vue du développement d'une batterie primaire, c'est-à-dire non rechargeable, Li-air datent des années 1970 (US 4 057 675). Ces batteries souffraient d'une autodécharge importante et d'une durée de vie faible due à la corrosion (réaction du lithium avec l'eau). Une batterie de puissance d'environ 1,2 kW, composés de six modules a néanmoins été construite (W.R. Momyer et al. (1980), Proc. 15th Intersoc. Energy Convers. Eng. Conf., page 1480). Une batterie rechargeable $Li/O_2$ sans phase aqueuse, utilisant un électrolyte polymère contenant un sel de lithium, a également été réalisée (K.M. Abraham et al. (1996), J. Electrochem. Soc. 143(1), pages 1 - 5). L'utilisation, dans cette cellule, d'une électrode positive poreuse à base de carbone avait donné de bons résultats en réduction de l'oxygène, mais cette électrode n'était pas adaptée à l'oxydation lors de la recharge. Seuls trois cycles ont pu être mis en oeuvre. A la connaissance de la Demanderesse, ces travaux ont été complétés par deux publications : Ogasawara et al., Journal of the American Chemical Sociey (2006) 125(4) 1393 et Kumar et al., Journal of the Electrochemical Sociey (2010) 157 (1): A50-A54.

Au cours de la décharge d'une batterie lithium-air, l'oxygène est réduit dans le compartiment d'électrode positive ($O_2$ + 4 e- + 2 $H_2O$ → 4 $OH^-$), le métal alcalin est oxydé dans le compartiment d'électrode négative (4 Li → 4 $Li^+$ + 4 $e^-$) et les ions alcalins ainsi formés migrent vers le compartiment d'électrode positive où ils peuvent précipiter si leur concentration atteint la limite de solubilité pour former de l'hydroxyde de lithium. La concentration en hydroxyde de lithium augmente donc dans l'électrolyte aqueux au cours de la décharge de la batterie et diminue au cours de la charge de la batterie lorsque les ions alcalins migrent de nouveau vers le compartiment d'électrode négative pour y être réduits et que les ions hydroxyles sont oxydés au niveau de l'électrode positive.

La capacité massique de la batterie dépend alors uniquement de la capacité de l'électrode négative et de la capacité de la batterie à stocker le produit de la réduction de l'oxygène, c'est-à-dire l'hydroxyde de lithium formé dans le compartiment de l'électrode positive au cours de la décharge de la batterie.

Pour que la batterie ait une capacité massique la plus élevée possible, il est souhaitable de limiter fortement le volume d'électrolyte aqueux et d'utiliser des solutions les plus concentrées possibles.

Toutefois, les inventeurs ont mis en évidence que la présence d'ions lithium dans l'électrolyte aqueux a un effet bloquant sur le dégagement d'oxygène lors de la recharge de la batterie. Cet effet bloquant avait déjà été constaté par le passé, mais dans un tout autre contexte : du lithium était utilisé dans l'électrolyte aqueux de batteries au nickel comme additif pour empêcher le dégagement d'oxygène lorsque cette réaction vient en compétition avec la réaction d'électrodes au nickel (Constantin et al, « The influence of some additives on the electrochemical behaviour of sintered nickel electrodes in alkaline electrolyte », Journal of Power Sources, 74 (1998), 188-197). Au contraire, dans le contexte de la présente invention, et en particulier dans le contexte des batteries lithium-air, l'effet bloquant des ions lithium est préjudiciable car il rend nécessaire d'appliquer une surtension supplémentaire aux bornes de la batterie lors de la recharge. Le rendement énergétique de la batterie, c'est-à-dire le rapport (énergie électrique débitée par la batterie lors de sa décharge / énergie électrique consommée pour la recharge de la batterie), en est diminué.

Pour améliorer le rendement énergétique de la batterie, il est donc souhaitable de diminuer la concentration en ions lithium dans l'électrolyte aqueux.

Il ressort de ces constatations que l'amélioration de la capacité massique de la batterie et du rendement énergétique de la batterie semblent être deux objectifs inconciliables. Malgré cela, les inventeurs ont réussi à améliorer le rendement électrique d'une batterie de type lithium-air à électrolyte aqueux sans diminuer sa capacité massique..

La présente invention a pour objet une batterie lithium-air comprenant :

- un compartiment d'électrode négative contenant du lithium métallique ;
- un compartiment d'électrode positive comprenant au moins une électrode positive à air, en contact avec une solution aqueuse contenant de l'hydroxyde de lithium ;
- un électrolyte solide séparant de façon étanche aux gaz et aux liquides le compartiment d'électrode négative du compartiment d'électrode positive ;

caractérisée en ce que la solution aqueuse contenant de l'hydroxyde de lithium contient en outre au moins un additif diminuant la solubilité des ions lithium.

Les documents US 4 684 584 et US 5 427 873, qui font référence à un additif diminuant la solubilité des ions lithium, concernent des piles lithium-eau et non des batteries lithium-air. Ces piles ne sont pas destinées à être rechargées. Le problème du rendement énergétique ne se pose donc pas. De plus, ces piles ne comprennent pas d'électrode positive à air.

La solubilité d'un composé désigne la concentration maximale de ce composé que l'on peut dissoudre dans un solvant. L'additif présent dans la solution aqueuse a pour effet de diminuer la solubilité des ions lithium, et ainsi de diminuer la concentration en ions lithium $Li^+$ dans une solution aqueuse saturée en lithium.

La limite de solubilité de l'hydroxyde de lithium dans l'eau est de 5,2 mol/L à 20 °C (d'après D.R. Lide, CRC Handbook of Chemistry and Physics, New York, 2005). La présence d'un additif selon l'invention permet avantageusement de diminuer cette limite de solubilité de l'hydroxyde de lithium. La limite de solubilité de l'hydroxyde de lithium dans la solution aqueuse contenant l'additif est de préférence inférieure à 4 mol/L, plus préférentiellement inférieure à 3 mol/L, et encore plus préférentiellement inférieure à 2 mol/L. La limite de solubilité est de préférence toutefois maintenue supérieure à 1 mol/L, une valeur inférieure pouvant entrainer des problèmes de re-solubilisation de l'hydroxyde de lithium lors de la recharge de la batterie. Avantageusement, la limite de solubilité de l'hydroxyde de lithium dans la solution aqueuse contenant l'additif selon l'invention peut être comprise entre 1 mol/L et 2 mol/L.

Cet additif peut être choisi par l'homme du métier parmi les composés chimiques connus présentant une solubilité dans l'eau supérieure à la solubilité du lithium et formant un sel avec les ions hydroxyde. De préférence, l'additif est un hydroxyde de métal alcalin. De manière plus préférée, l'additif diminuant la solubilité des ions lithium est choisi dans le groupe constitué par l'hydroxyde de potassium et l'hydroxyde de sodium. De manière encore plus préférée, l'additif est l'hydroxyde de potassium.

La concentration de l'additif diminuant la solubilité des ions lithium dans la solution aqueuse est fixée par l'homme du métier, en fonction de la nature de cet additif, de manière à abaisser la limite de solubilité de l'hydroxyde de lithium dans les valeurs décrite ci-dessus. Lorsque l'additif est du potassium, sa concentration dans la solution aqueuse contenant de l'hydroxyde de lithium peut être comprise entre 1 mol/L et 10 mol/L, plus préférentiellement entre 4 mol/L et 9 mol/L, et encore plus préférentiellement entre 7 mol/L et 8 mol/L.

L'additif peut être ajouté à la solution aqueuse sous toute forme. En particulier, l'additif peut être ajouté sous forme d'un sel d'hydroxyde. Si l'additif est du sodium, il est possible d'ajouter à la solution aqueuse un sel d'hydroxyde de sodium. Si l'additif est du potassium, il est possible d'ajouter à la solution aqueuse un sel d'hydroxyde de potassium.

Les inventeurs ont constaté que la présence d'au moins un additif selon l'invention dans la solution aqueuse constituant l'électrolyte liquide d'une batterie lithium-air a pour effet de réduire significativement la tension de charge de la batterie. En outre, la présence de l'additif selon l'invention n'a pas d'impact sur l'énergie restituée lors de la décharge de la batterie. En conséquence, le rendement énergétique de la batterie lithium-air est amélioré.

La présente invention a donc également pour objet l'utilisation d'au moins un additif diminuant la solubilité des ions lithium pour améliorer le rendement énergétique d'une batterie lithium-air, l'additif étant contenu dans la solution aqueuse contenant de l'hydroxyde de lithium constituant l'électrolyte liquide de la batterie lithium-air.

En outre, la présence d'au moins un additif selon l'invention dans la solution aqueuse constituant l'électrolyte liquide d'une batterie lithium-air n'a pas d'impact rédhibitoire sur la capacité massique de la batterie. En effet, si la concentration de l'hydroxyde de lithium atteint et dépasse la concentration de saturation, l'hydroxyde de métal alcalin précipite. La formation d'un précipité n'est pas gênant car, au moment de la recharge de la batterie, celui-ci peut de nouveau se solubiliser et libérer les ions lithium. Le précipité d'hydroxyde de lithium constitue ainsi un réservoir d'ions lithium.

Il a été cependant constaté par le passé qu'au moment de la précipitation de l'hydroxyde de lithium dans l'électrolyte aqueux, une couche cristalline dense d'hydroxyde de lithium peut se former au niveau de la surface de la membrane d'électrolyte solide. La présence de cette couche dense, qui n'est pas conductrice de cations, peut provoquer une augmentation très importante de la résistance cationique du système au niveau de l'interface entre la membrane d'électrolyte solide et l'électrolyte aqueux.

Avantageusement, la batterie selon l'invention dispose d'un moyen empêchant la formation d'une couche cristalline dense d'hydroxyde de lithium à la surface de l'électrolyte solide.

Le moyen empêchant la formation d'une couche cristalline dense d'hydroxyde de lithium à la surface de l'électrolyte solide peut être une couche d'un polyélectrolyte organique conducteur de cations. De tels polyélectrolytes organiques ont par exemple été décrits dans la demande de brevet WO 2011 051597.

Selon un mode de réalisation avantageux, la présente invention a pour objet une batterie lithium-air contenant,

- en tant qu'électrolyte solide, une membrane céramique conductrice de cations alcalins recouverte d'un polyélectrolyte organique, insoluble et chimiquement stable dans l'eau à pH basique et conducteur de cation, et
- en tant qu'électrolyte liquide, une solution aqueuse d'hydroxyde de lithium, en contact avec ledit polymère organique, la solution aqueuse contenant de l'hydroxyde de lithium contenant en outre au moins un additif diminuant la solubilité des ions lithium.

Le compartiment d'électrode négative peut comprendre n'importe quelle électrode pouvant former des ions lithium, par exemple une électrode en lithium métallique, une électrode en alliage, par exemple lithium/silice ou lithium/étain, ou une électrode en un matériau à insertions, par exemple lithium/graphite. De préférence, le compartiment d'électrode négative comprend une électrode en lithium métallique, en raison de la densité énergétique élevée de ce type d'électrode.

Les électrodes positives à air sont connues dans l'art antérieur. Généralement, une électrode à air présente une structure solide poreuse, à grande surface spécifique, en contact avec l'électrolyte liquide. L'interface entre l'électrode à air et l'électrolyte liquide est une interface dite à « triple contact » où sont présent simultanément la matière active à l'électrode, l'oxydant gazeux et l'électrolyte liquide.

L'électrode positive à air est de préférence conçue de manière à permettre le triple contact entre l'électrolyte, l'oxydant gazeux et la matière active solide de l'électrode. Elle peut être choisie en principe parmi toutes celles utilisées habituellement dans la technique et décrites notamment dans l'article de Neburchilov et al. « A review on air cathodes for zinc-air fuel cells », Journal of Power Sources, 195 (2010), 1271-1291.

Il s'agit de préférence d'une électrode obtenue par agglomération d'une poudre de carbone constituée de grains de carbone à haute surface, telle que le produit Vulcan® XC72, commercialisé par la société Cabot. La surface spécifique du carbone peut être augmentée par réaction avec un gaz tel que le $CO_2$, préalablement à son incorporation dans l'électrode à air. Avantageusement, la surface spécifique des grains de carbone est élevée. En effet, plus elle est importante, plus la densité de courant par unité de surface géométrique d'électrode est élevée. L'électrode poreuse est fabriquée de préférence par agglomération des grains de carbone à l'aide d'un liant, qui est de préférence un polymère hydrophobe fluoré tel que le Teflon® FEP commercialisé par la société Dupont. Une description détaillée d'une électrode à air pour accumulateur métal-air peut par exemple être trouvée dans la demande WO 2000/036677.

L'électrode positive à air contient en outre de préférence au moins un catalyseur de réduction d'oxygène. Ce catalyseur de réduction d'oxygène est de préférence choisi dans le groupe constitué de l'oxyde de manganèse et l'oxyde de cobalt.

L'électrode positive à air peut en outre comprendre une membrane polymère échangeuse d'anion formant une séparation entre le matériau d'électrode et la solution aqueuse constituant l'électrolyte liquide. De telles membranes, qui sont par exemple décrites dans la demande de brevet WO 2010/128242, permettent avantageusement de préserver l'électrode positive à air d'une dégradation due à la carbonatation progressive de l'électrolyte.

La recharge d'une batterie lithium-air utilisant un électrolyte alcalin en contact avec l'électrode à air s'effectue par réduction d'ion Li$^+$ en lithium métal à l'électrode négative (4 Li$^+$ + 4 e$^-$ → 4 Li) et par oxydation d'ion OH- à l'électrode positive pour produire de l'oxygène moléculaire et de l'eau (4 OH$^-$ → $O_2$ + 4 e$^-$ + 2$H_2O$).

La réaction de dégagement d'oxygène peut s'effectuer sur une électrode à air directement, mais l'électrode à air est conçue et optimisée pour réduire une réaction électrochimique avec un gaz (l'oxygène de l'air) et un liquide (l'électrolyte). Pour cette raison, cette électrode est de préférence poreuse, avec une surface de réaction la plus grande possible. Cette structure la rend plus fragile et mal adaptée à une réaction avec un liquide seulement pour produire un gaz. En outre, les catalyseurs utilisés dans l'électrode à air pour améliorer la réaction de réduction électrochimique de l'oxygène dans l'électrolyte alcalin (oxydes de manganèse ou composé à base de cobalt) ne sont stables aux potentiels plus positifs nécessaires à la réaction de dégagement d'oxygène.

Il est donc préférable d'utiliser une deuxième électrode positive qui sera utilisée pendant les phases de recharge de la batterie seulement.

La batterie selon l'invention peut donc avantageusement comprendre en outre une seconde électrode positive à dégagement d'oxygène, en contact avec la solution aqueuse contenant de l'hydroxyde de lithium. La seconde électrode positive à dégagement d'oxygène peut être, par exemple, une électrode en acier, de préférence inoxydable, typiquement un acier de type 316L, ou une électrode en nickel. Dans la batterie, cette électrode peut typiquement avoir une structure de type grille ou plaque perforée, et elle peut être située entre l'électrode négative et l'électrode à air. La structure perforée de cette électrode sert à assurer le libre passage des constituants de l'électrolyte liquide entre l'électrode négative et l'électrode à air pendant la décharge.

Selon un mode de réalisation utilisant une batterie munie d'une seconde électrode positive, la première électrode positive à air est découplée pendant les phases de recharge de la batterie. La charge s'effectue alors sur la deuxième électrode positive à dégagement d'oxygène. Lors de la phase de décharge de la batterie, la seconde électrode positive à dégagement d'oxygène est découplée et la décharge s'effectue sur la première électrode positive à air. La batterie peut être équipée de moyens de commutation entre des électrodes, et éventuellement d'un moyen de commande permettant de contrôler la commutation. De tels moyens sont décrits par exemple dans la demande de brevet FR 11 54356.

Enfin, la présente invention a pour objet un procédé de stockage et de restitution d'énergie électrique utilisant une batterie lithium-air selon l'invention, comprenant les étapes successives suivantes :

(a) une phase de décharge au cours de laquelle du lithium métallique contenu dans le compartiment d'électrode négative s'oxyde et précipite sous forme d'hydroxyde de lithium dans la solution aqueuse du compartiment d'électrode positive ;

(b) une phase de recharge au cours de laquelle l'hydroxyde de lithium se solubilise pour libérer des ions lithium qui sont réduits au niveau de l'électrode négative.

L'invention sera mieux comprise à la lumière des exemples non limitatifs et purement illustratifs suivants, accompagnés des figures annexées parmi lesquelles :

- la **Figure 1** est un graphique représentant la concentration de salutation en ions $Li^+$ en solution en fonction de la concentration en ions $K^+$ (concentrations théoriques et concentrations réellement mesurées par ICP-AES) ;
- la **Figure 2** est un graphique représentant le potentiel d'évolution de réaction de l'oxygène (OER), mesuré à 33 $mA.cm^{-2}$, sur un tissu d'acier non activé en fonction de la concentration théorique en ions $K^+_x$ dans les mélanges électrolytiques $K_xLi_{Sat}$ (T = 25°C ; Surface = 3,14 $cm^2$ ; mesures réalisées après 30 minutes de fonctionnement) ;
- la **Figure 3** est un graphique représentant la surtension de l'OER, à 33 $mA.cm^{-2}$, en fonction de la concentration réelle en ions $Li^+$ en solution (T = 25°C ; Surface = 3,14 $cm^2$ ; les valeurs ont été acquise après 30 minutes de fonctionnement).

Préparation des électrolytes liquides

Des solutions aqueuses saturées en hydroxyde de lithium et contenant un additif selon l'invention (ici le potassium) avec une concentration variant de 1 M à 8 M ont été préparées selon le protocole suivant :

Les masses exactes des poudres de LiOH et de KOH théoriquement contenues dans les solutions ont été mélangées. Les mélanges ont été introduits dans des fioles jaugées et de l'eau a été ajoutée jusqu'au trait de jauge. Les solutions ont ensuite été mélangées sous agitation magnétique et ultrasons. La solubilisation des composés a provoqué une augmentation de la température des solutions, qui ont de ce fait été refroidies naturellement à température du laboratoire, T = 25°C. Le niveau d'eau a été complété une seconde fois, puis les solutions ont été homogénéisées à nouveau sous agitation magnétique. Les mélanges solutions/poudres obtenus ont par la suite été filtrés et le niveau de l'électrolyte a été complété.

Les différentes solutions ont été nommées $K_xLi_{Sat}$, où *x* est la concentration théorique de la solution en ions potassium ; $K_0Li_{Sat}$ fait référence à une solution saturée en LiOH sans additif.

Effet de l'additif sur la diminution de la solubilité des ions lithium

Les électrolytes ainsi préparés ont été analysés par ICP-AES ; ils ont été dilués entre 1 000 fois, pour la solution $K_0Li_{Sat}$, et 10 000 fois pour le mélange $K_8Li_{Sat}$. Des détails sur la méthode d'analyse ICP-AES (*Inductively Coupled Plasma-Atomic Emission Spectrometry* selon la terminologie anglo-saxonne) peuvent être trouvés dans l'ouvrage « Handbook of Elemental Speciation: Techniques and Methodology », par Klaus G. Heumann.

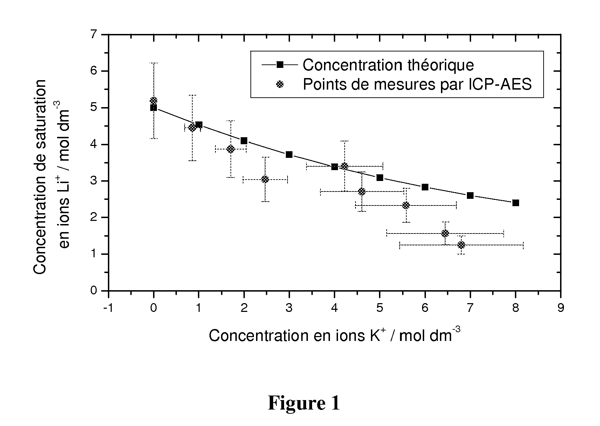

La **Figure 1** présente les concentrations de saturation en ions $Li^+$ des solutions en fonction de leur concentration en ions $K^+$. Jusqu'à une concentration approximative de 6 M d'ions potassium en solution, les valeurs théoriques sont en accord avec les valeurs expérimentales. Une fois cette valeur de concentration en ions $K^+$ dépassée, la concentration en ions $Li^+$ chute drastiquement par rapport à la valeur définie théoriquement.

On constate que l'ajout de potassium permet de diminuer la concentration en ions lithium dans la solution aqueuse saturée en hydroxyde de lithium.

L'influence de la modification de l'électrolyte sur des tissus d'acier 316L à courant imposé a été mesurée. Sur les valeurs présentées ci-dessous, la chute ohmique a été compensée.

Effet de l'additif sur le potentiel de la réaction de dégagement d'oxygène

Les potentiels de la réaction de dégagement d'oxygène ont été mesurés après 30 minutes de fonctionnement à 33 mA.cm$^{-2}$ sur des tissus d'acier 316L. Une nouvelle électrode a été utilisée à chaque essai afin de ne pas être perturbé par les évolutions dues au développement d'une couche catalytique à leur surface.

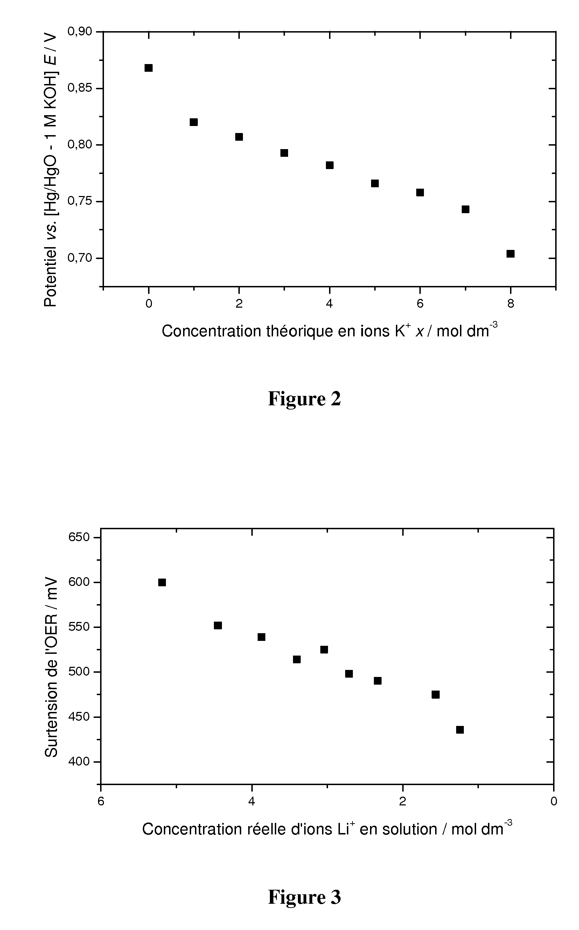

La **Figure 2** représente l'évolution du potentiel d'évolution de réaction de l'oxygène (OER), mesuré à 33 mA.cm$^{-2}$, sur un tissu d'acier non activé en fonction de la concentration théorique en ions $K^+_x$ dans les mélanges électrolytiques $K_xLi_{Sat}$ (T = 25°C ; $S_{géo}$ = 3,14 cm$^2$ ; mesures réalisées après 30 minutes de fonctionnement).

La **Figure 3** représente l'évolution de la surtension de l'OER, à 33 ma.cm$^{-2}$ en fonction de la concentration réelle en ions $Li^+$ en solution. Le potentiel standard de la réaction a été déterminé en solution aqueuse saturée en hydroxyde de lithium à 270 mV vs. [Hg/HgO - 1 M KOH] (T = 25°C ; Surface = 3,14 cm$^2$ ; les valeurs ont été acquise après 30 minutes de fonctionnement).

On constate que la présence dans l'électrolyte aqueux de l'additif selon l'invention a pour effet de diminuer la surtension aux bornes de l'électrode lors de la réaction de dégagement d'oxygène.

Effet de l'additif sur les pertes énergétiques de la réaction de dégagement d'oxygène

Les mesures de la performance électrocatalytique d'une électrode d'acier 316L ont été enregistrées en régime quasi-stationnaire sur une électrode à disque tournant (EDT) d'une surface géométrique de 0,19 cm$^2$ (T = 25°C ; $v_b$ = 0,1 mV s$^{-1}$ ; $S_{géo}$ = 0,19 cm$^2$).

Il a été constaté que l'utilisation d'un additif dans l'électrolyte permet de réduire le potentiel de l'OER, quel que soit le courant d'électrode. Les différences sont d'autant plus marquées que la concentration du mélange en additif est importante, mais aussi que le courant d'électrode est important.

Les différents paramètres cinétiques de l'électrode d'acier 316L sont récapitulés, suivant le milieu électrolytique utilisé, dans le tableau 1.

Tableau 1

| | Potentiel d'électrode E *vs*. [Hg/HgO - 1 M KOH] à 33 mA cm$^{-2}$ | Surtension d'électrode $\eta_{O2}$ | Réduction des surtensions |
|---|---|---|---|
| $K_0Li_{sat}$ = solution aqueuse saturée en LiOH | 868 mV | 598 mV | |
| $K_1Li_{Sat}$ | 820 mV | 550 mV | 8,0 % |
| $K_2Li_{Sat}$ | 807 mV | 537 mV | 10,2 % |
| $K_3Li_{Sat}$ | 793 mV | 523 mV | 12,5 % |
| $K_4Li_{Sat}$ | 782 mV | 512 mV | 14,4 % |
| $K_5Li_{Sat}$ | 766 mV | 496 mV | 17,1 % |
| $K_6Li_{Sat}$ | 758 mV | 488 mV | 18,4 % |
| $K_7Li_{Sat}$ | 743 mV | 473 mV | 20,9 % |

Les surtensions $\eta_{O2}$ ($K_xLi_{Sat}$) ont été déterminées par rapport au potentiel standard $E°_{H2O/O2}$ dans la solution aqueuse saturée en LiOH sans additif $\eta_{O2}$ de $K_0Li_{Sat}$). Le potentiel standard $E°_{H2O/O2}$ (en solution aqueuse saturée en LiOH sans additif) a été déterminé à 270 mV vs. [Hg/HgO - 1 M KOH].

La réduction des surtensions est calculée de la façon suivante :

$$\text{Valeur} = (\ (\eta_{O2}\ \text{de}\ K_0 Li_{Sat}) - (\eta_{O2}\ \text{de}\ K_x Li_{Sat})\ )\ /\ \eta_{O2}\ \text{de}\ K_0 Li_{Sat}$$

En conclusion, l'utilisation d'un additif dans l'électrolyte aqueux réduit significativement la surtension, et donc les pertes énergétiques de l'électrode de dégagement d'oxygène sous courant des systèmes de type batteries lithium-air à électrolyte aqueux.

**Revendications**

1. Batterie lithium-air rechargeable comprenant :

   - un compartiment d'électrode négative contenant du lithium métallique ;
   - un compartiment d'électrode positive comprenant au moins une électrode positive à air, en contact avec une solution aqueuse contenant de l'hydroxyde de lithium ;
   - un électrolyte solide séparant de façon étanche aux gaz et aux liquides le compartiment d'électrode négative du compartiment d'électrode positive ;
   **caractérisée en ce que** la solution aqueuse contenant de l'hydroxyde de lithium contient en outre au moins un additif diminuant la solubilité des ions lithium.

2. Batterie selon la revendication 1, **caractérisée en ce que** la limite de solubilité de l'hydroxyde de lithium dans la solution aqueuse contenant l'additif est inférieure à 4 mol/L, plus préférentiellement inférieure à 3 mol/L, et encore plus préférentiellement comprise entre 1 mol/L et 2 mol/L.

3. Batterie selon l'une ou l'autre des revendications 1 et 2, **caractérisée en ce que** l'additif diminuant la solubilité des ions lithium est un hydroxyde de métal alcalin.

4. Batterie selon la revendication 3, **caractérisée en ce que** l'additif diminuant la solubilité des ions lithium est choisi dans le groupe constitué par l'hydroxyde de potassium et l'hydroxyde de sodium, l'additif étant de préférence l'hydroxyde de potassium.

5. Batterie selon l'une quelconque des revendications 1 à 4, **caractérisée en ce qu'**elle dispose d'un moyen empêchant la formation d'une couche cristalline dense d'hydroxyde de lithium à la surface de l'électrolyte solide.

6. Batterie selon la revendication 5, **caractérisée en ce que** le moyen empêchant la formation d'une couche cristalline dense d'hydroxyde de lithium à la surface de l'électrolyte solide est une couche d'un polyélectrolyte organique conducteur de cations.

7. Batterie selon l'une quelconque des revendications 1 à 6, **caractérisée en ce qu'**elle comprend en outre une seconde électrode positive à dégagement d'oxygène, en contact avec la solution aqueuse contenant de l'hydroxyde de lithium.

8. Batterie selon l'une quelconque des revendications 1 à 7, **caractérisée en ce que** l'électrode positive à air comprend en outre une membrane polymère échangeuse d'anion formant une séparation entre le matériau d'électrode et la solution aqueuse constituant l'électrolyte liquide

9. Procédé de stockage et de restitution d'énergie électrique utilisant une batterie lithium-air selon l'une quelconque des revendications 1 à 8, comprenant les étapes successives suivantes :

   (a) une phase de décharge au cours de laquelle du lithium métallique contenu dans le compartiment d'électrode négative s'oxyde et précipite sous forme d'hydroxyde de lithium dans la solution aqueuse du compartiment d'électrode positive ;
   (b) une phase de recharge au cours de laquelle l'hydroxyde de lithium se solubilise pour libérer des ions lithium qui sont réduits au niveau de l'électrode négative.

10. Utilisation d'au moins un additif diminuant la solubilité des ions lithium pour améliorer le rendement énergétique d'une batterie lithium-air, l'additif étant contenu dans la solution aqueuse contenant de l'hydroxyde de lithium constituant l'électrolyte liquide de la batterie lithium-air.

**Patentansprüche**

1. Wiederaufladbare Lithium-Luft-Batterie, umfassend:

   - ein Kompartiment für die negative Elektrode, das metallisches Lithium enthält;
   - ein Kompartiment für die positive Elektrode, das mindestens eine positive Luftelektrode in Kontakt mit einer Lithiumhydroxid enthaltenden wässrigen Lösung umfasst;
   - einen Festelektrolyt, der das Kompartiment für die negative Elektrode gas- und flüssigkeitsdicht von dem Kompartiment für die negative Elektrode trennt;
   **dadurch gekennzeichnet, dass** die Lithiumhydroxid enthaltende wässrige Lösung außerdem mindestens ein die Löslichkeit von Lithiumionen herabsetzendes Additiv enthält.

2. Batterie nach Anspruch 1, **dadurch gekennzeichnet, dass** die Löslichkeitsgrenze von Lithiumhydroxid in der das Additiv enthaltenden wässrigen Lösung weniger als 4 mol/L und weiter bevorzugt weniger als 3 mol/L beträgt und noch weiter bevorzugt zwischen 1 mol/L und 2 mol/L liegt.

3. Batterie nach einem der Ansprüche 1 und 2, **dadurch gekennzeichnet, dass** es sich bei dem die Löslichkeit von Lithiumionen herabsetzenden Additiv um ein Alkalimetallhydroxid handelt.

4. Batterie nach Anspruch 3, **dadurch gekennzeichnet, dass** das die Löslichkeit von Lithiumionen herabsetzende Additiv aus der Gruppe bestehend aus Kaliumhydroxid und Natriumhydroxid ausgewählt ist, wobei es sich bei dem Additiv vorzugsweise um Kaliumhydroxid handelt.

5. Batterie nach einem der Ansprüche 1 bis 4, **dadurch gekennzeichnet, dass** sie über ein Mittel, das die Bildung einer dichten kristallinen Lithiumhydroxidschicht auf der Oberfläche des Festelektrolyts verhindert, verfügt.

6. Batterie nach Anspruch 5, **dadurch gekennzeichnet, dass** es sich bei dem Mittel, das die Bildung einer dichten kristallinen Lithiumhydroxidschicht auf der Oberfläche des Festelektrolyts verhindert, um eine Schicht aus einem kationenleitenden organischen Polelektrolyt handelt.

7. Batterie nach einem der Ansprüche 1 bis 6, **dadurch gekennzeichnet, dass** sie außerdem eine zweite positive Sauerstoffabgabeelektrode in Kontakt mit der Lithiumhydroxid enthaltenden wässrigen Lösung umfasst.

8. Batterie nach einem der Ansprüche 1 bis 7, **dadurch gekennzeichnet, dass** die positive Luftelektrode außerdem eine polymere Anionenaustauschmembran umfasst, die eine Separation zwischen dem Elektrodenmaterial und der den Flüssigelektrolyt darstellenden wässrigen Lösung bildet.

9. Verfahren zur Speicherung und Wiederabgabe von elektrischer Energie unter Verwendung einer Lithium-Luft-Batterie nach einem der Ansprüche 1 bis 8, das folgende aufeinander folgende Schritte umfasst:

   (a) eine Entladungsphase, in deren Verlauf in dem Kompartiment für die negative Elektrode enthaltenes metallisches Lithium oxidiert wird und in Form von Lithiumhydroxid in der wässrigen Lösung des Kompartiment für die positive Elektrode ausfällt;
   (b) eine Wiederaufladungsphase, in deren Verlauf das Lithiumhydroxid in Lösung geht, wobei Lithiumionen freigesetzt werden, die an der negativen Elektrode reduziert werden.

10. Verwendung mindestens eines die Löslichkeit von Lithiumionen herabsetzenden Additivs zur Verbesserung des energetischen Wirkungsgrads einer Lithium-Luft-Batterie, wobei das Additiv in der Lithiumhydroxid enthaltenden wässrigen Lösung, die den Flüssigelektrolyt der Lithium-Luft-Batterie darstellt, enthalten ist.

**Claims**

1. A rechargeable lithium-air battery comprising:

- a negative-electrode compartment containing lithium metal;
- a positive-electrode compartment comprising at least one positive air electrode, in contact with an aqueous solution containing lithium hydroxide ;
- a solid electrolyte separating, in a gas- and liquid-tight manner, the negative-electrode compartment from the positive-electrode compartment;
**characterized in that** the aqueous solution containing lithium hydroxide furthermore contains at least one additive diminishing the solubility of the lithium ions.

2. The battery according to claim 1, **characterized in that** the solubility limit of lithium hydroxide in the aqueous solution containing the additive is below 4 mol/L, more preferably below 3 mol/L, and more preferably still between 1 mol/L and 2 mol/L.

3. The battery according to either one of claims 1 or 2, **characterized in that** the additive diminishing the solubility of the lithium ions is an alkali metal hydroxide.

4. The battery according to claim 3, **characterized in that** the additive diminishing the solubility of the lithium ions is chosen from the group consisting of potassium hydroxide and sodium hydroxide, the additive preferably being potassium hydroxide.

5. The battery according to any one of claims 1 to 4, **characterized in that** it possesses a means for preventing the formation of a dense crystalline layer of lithium hydroxide at the surface of the solid electrolyte.

6. The battery according to claim 5, **characterized in that** the means for preventing the formation of a dense crystalline layer of lithium hydroxide at the surface of the solid electrolyte is a layer of an organic cation-conducting polyelectrolyte.

7. The battery according to any one of claims 1 to 6, **characterized in that** it further comprises a second positive oxygen releasing electrode, in contact with the aqueous solution containing lithium hydroxide.

8. The battery according to any one of claims 1 to 7, **characterized in that** the positive air electrode further comprises an anion exchange polymer membrane forming a separation between the electrode material and the aqueous solution constituting the liquid electrolyte.

9. A method for storing and releasing electrical energy using a lithium-air battery according to any one of claims 1 to 8, comprising the following successive steps :

(a) a discharging phase during which the lithium metal contained in the negative-electrode compartment oxidates and precipitates in the form of lithium hydroxide in the aqueous solution of the positive-electrode compartment;
(b) a recharging phase during which the lithium hydroxide solubilizes to release lithium ions which are reduced at the level of the negative electrode.

10. Use of at least one additive diminishing the solubility of lithium ions to improve the energy efficiency of a lithium-air battery, the additive being contained in the aqueous solution containing lithium hydroxide constituting the liquid electrolyte of the lithium-air battery.

**Figure 1**

**Figure 2**

**Figure 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4057675 A
- US 4684584 A
- US 5427873 A
- WO 2011051597 A
- WO 2000036677 A
- WO 2010128242 A
- FR 1154356

**Littérature non-brevet citée dans la description**

- **W.R. MOMYER et al.** *Proc. 15th Intersoc. Energy Convers. Eng. Conf.,* 1980, 1480
- **K.M. ABRAHAM et al.** *J. Electrochem. Soc.,* 1996, vol. 143 (1), 1-5
- **OGASAWARA et al.** *Journal of the American Chemical Sociey,* 2006, vol. 125 (4), 1393
- **KUMAR et al.** *Journal of the Electrochemical Sociey,* 2010, vol. 157 (1), A50-A54
- **CONSTANTIN et al.** The influence of some additives on the electrochemical behaviour of sintered nickel electrodes in alkaline electrolyte. *Journal of Power Sources,* 1998, vol. 74, 188-197
- **D.R. LIDE.** CRC Handbook of Chemistry and Physics. 2005
- **NEBURCHILOV et al.** A review on air cathodes for zinc-air fuel cells. *Journal of Power Sources,* 2010, vol. 195, 1271-1291